# EUROPÄISCHE PATENTSCHRIFT

(11) **EP 1 005 709 B1**
(45) Veröffentlichungstag und Bekanntmachung des Hinweises auf die Patenterteilung: **19.02.2003**
(21) Anmeldenummer: 98946256.9
(22) Anmeldetag: 05.08.1998
(51) Int. Cl.: H02H 1/06, H02H 3/33

(54) **FEHLERSTROM-SCHUTZEINRICHTUNG**
FAULT-CURRENT PROTECTIVE SWITCHGEAR
DISPOSITIF PROTECTEUR POUR COURANT DE FUITE

(30) Priorität: 18.08.1997 DE 19735743
(43) Veröffentlichungstag der Anmeldung: 07.06.2000
(73) Patentinhaber: SIEMENS AKTIENGESELLSCHAFT, 80333 München (DE)
(72) Erfinder: BAUER, Bernhard, D-93053 Regensburg (DE)
(86) Internationale Anmeldenummer: DE9802246
(87) Internationale Veröffentlichungsnummer: WO99009628

(56) Entgegenhaltungen:
- US-A- 5 510 945

## Beschreibung

Die Erfindung bezieht sich auf eine Fehlerstrom-Schutzeinrichtung.

Eine Fehlerstrom-Schutzeinrichtung dient zur Sicherstellung des Schutzes gegen einen gefährlichen Fehlerstrom in einer elektrischen Anlage. Ein solcher Fehlerstrom tritt auf, wenn ein spannungsführendes Leitungsteil einen elektrischen Kontakt nach Masse aufweist. Dies ist beispielsweise dann der Fall, wenn eine Person ein spannungsführendes Teil einer elektrischen Anlage berührt. Der Fehlerstrom fließt dann über die Person als Körperstrom nach Masse ab. Die zum Schutz gegen gefährliche Körperströme eingesetzten Fehlerstrom-Schutzeinrichtungen müssen dann bei einem Fehlerstrom, der größer als 30 mA ist, sicher und schnell die elektrische Anlage vom Netz trennen.

Der Aufbau einer Fehlerstrom-Schutzeinrichtung ist beispielsweise aus "etz", Band 107 (1986), Heft 20, Seiten 938 bis 945, bekannt. Dort sind insbesondere in den Bildern 1 bis 3 Prinzipschaltbilder und Funktionsprinzipien eines Fehlerstrom-Schutzschalters dargestellt. Dabei werden zwei unterschiedliche Grundtypen unterschieden. Der als Fehlerstrom-Schutzschalter bezeichnete FI-Schutzschalter ist eine Fehlerstrom-Schutzeinrichtung, in der die zum Schaltvorgang erforderliche elektrische Leistung netzspannungsunabhängig aus dem Fehlerstrom selbst gewonnen wird. Beim sogenannten Differenzstrom- oder DI-Schutzschalter handelt es sich demgegenüber um eine Fehlerstrom-Schutzeinrichtung, bei der die zum Schaltvorgang erforderliche elektrische Hilfsenergie aus dem Netz selbst entnommen wird. Ein solcher DI-Schutzschalter benötigt somit zu seinem Betrieb einen Netzanschluß sowie ein Netzteil, das die Netzspannung in die zum Betrieb seiner Komponenten erforderliche Versorgungsspannung umwandelt.

Bei einem solchen DI-Schutzschalter wird üblicherweise die vom Fehlerstrom in der Sekundärwicklung des Summenstromwandlers induzierte Spannung in einem Verstärker verstärkt. Überschreitet die am Ausgang des Verstärkers anstehende Fehlerspannung eine vorgegebene Referenzspannung, so erfolgt die Auslösung des DI-Schutzschalters. Diese Referenzspannung wird in der Regel durch einen Spannungsteiler bereitgestellt, der an ein Netzteil angeschlossen ist, das die im DI-Schutzschalter befindlichen elektronischen Schaltungen mit der zu ihrem Betrieb erforderlichen Betriebsspannung versorgt (man vergleiche auch beispielsweise US-A-5 510 945).

Ein in einer elektrischen Anlage fließender Fehler- oder Ableitstrom unterhalb des Auslösefehlerstromes führt zu einer Fehlerspannung am Ausgang des Verstärkers, die unterhalb der dem Auslösefehlerstrom zugeordneten Referenzspannung liegt. Wird die Netzspannung abgeschaltet, so fällt die Betriebsspannung und damit auch die Referenzspannung mit einer von der Größe der verwendeten Glättungskondensatoren abhängigen Zeitkonstante ab. Unterschreitet die Referenzspannung die Fehlerspannung zu einem Zeitpunkt, in dem noch genügend Energie zur Auslösung des Auslöserelais im Netzteil gespeichert ist, kommt es zu einer Fehlauslösung des DI-Schutzschalters.

Der Erfindung liegt nun die Aufgabe zugrunde, eine Fehlerstrom-Schutzeinrichtung anzugeben, bei der ein durch Abschalten der Netzspannung hervorgerufener fehlerhafter Betriebszustand vermieden ist.

Die genannte Aufgabe wird gemäß der Erfindung gelöst mit einer Fehlerstrom-Schutzeinrichtung mit den Merkmalen des Patentanspruches 1. Die Fehlerstrom-Schutzeinrichtung gemäß der Erfindung enthält eine Verstärkerschaltung zum Erzeugen einer aus einem Fehlerstrom abgeleiteten Fehlerspannung, eine Vergleichsschaltung zum Vergleichen der Fehlerspannung mit einer Referenzspannung, und eine an ein Netzteil angeschlossene Referenzschaltung zum Erzeugen der Referenzspannung sowie einer Betriebsspannung für die Verstärkerschaltung, wobei Mittel vorgesehen sind, die bei Absinken der Ausgangsspannung des Netzteils unter einen vorgegebenen Wert die Referenzspannung wenigstens auf die momentane Betriebsspannung zumindest dann erhöhen, wenn die Fehlerspannung kleiner ist als die Referenzspannung.

Mit anderen Worten: Wenn die Fehlerspannung in dem Zeitpunkt, in dem die Ausgangsspannung des Netzteils den vorgegebenen Wert unterschreitet kleiner ist als die Referenzspannung, d. h. wenn die Auslösebedingung für den Auslösekreis der Fehlerstrom-Schutzeinrichtung in diesem Zeitpunkt nicht erfüllt ist, wird die Referenzspannung wenigstens auf die momentane im Absinken begriffene Betriebsspannung erhöht.

Durch das Anheben der Referenzspannung zumindest auf die momentane Betriebsspannung, vorzugsweise auf die momentane Betriebsspannung, ist sichergestellt, daß die von der Verstärkerschaltung aus dem Fehlerstrom abgeleitete Fehlerspannung die Referenzspannung bei Absinken der Ausgangsspannung des Netzteils nicht überschreitet, da die Ausgangsspannung einer Verstärkerschaltung in der Regel kleiner ist als die zu ihrem Betrieb verwendete Betriebsspannung. Damit sind Fehlauslösungen beim Abschalten der Netzspannung weitgehend vermieden.

In einer weiteren vorteilhaften Ausgestaltung der Erfindung enthält die Referenzschaltung einen an die Betriebsspannung angeschlossenen ersten Spannungsteiler zum Erzeugen der Referenzspannung, der über ein in Abhängigkeit von der Ausgangsspannung des Netzteils steuerbares Schaltelement an Masse angeschlossen ist. Auf diese Weise kann durch einen einfachen Schaltvorgang die Referenzspannung an die Betriebsspannung angehoben werden.

Vorzugsweise ist als steuerbares Schaltelement ein Transistor vorgesehen.

In einer weiteren vorteilhaften Ausgestaltung der Erfindung enthält die Referenzschaltung einen zweiten Spannungsteiler zum Erzeugen einer Steuerspannung für das steuerbare Schaltelement.

Insbesondere ist der zweite Spannungsteiler zwischen der Ausgangsspannung des Netzteils und Masse geschaltet und umfaßt vorzugsweise eine in Serie zwischen seine Teilerwiderstände in Sperrichtung geschaltete Zenerdiode, die an die Basis des als steuerbares Schaltelement vorgesehenen Transistors angeschlossen ist.

In einer weiteren bevorzugten Ausgestaltung der Erfindung ist der Ausgang der Vergleichsschaltung über eine Rückkopplungsschaltung an die Referenzschaltung angeschlossen. Dadurch ist sichergestellt, daß bei einem durch Ansteuerung einer Auslösespule möglicherweise verursachten Einbruch der vom Netzteil bereitgestellten Versorgungsspannung die zum Auslösen der Auslösespule erforderliche Auslösebedingung, nämlich daß die Fehlerspannung größer ist als eine Referenzspannung, aufrechterhalten bleibt.

Insbesondere enthält die Rückkopplungsschaltung eine Diode und einen dazu in Serie geschalteten Widerstand und ist an eine die Steuerspannung führende Steuerleitung angeschlossen.

In einer weiteren vorteilhaften Ausführungsform enthält die Referenzschaltung eine Spannungsstabilisierungsschaltung zum Erzeugen einer stabilisierten Betriebsspannung aus der Ausgangsspannung. Dadurch werden reproduzierbare und stabile Betriebsbedingungen für die Fehlerstrom-Schutzeinrichtung geschaffen.

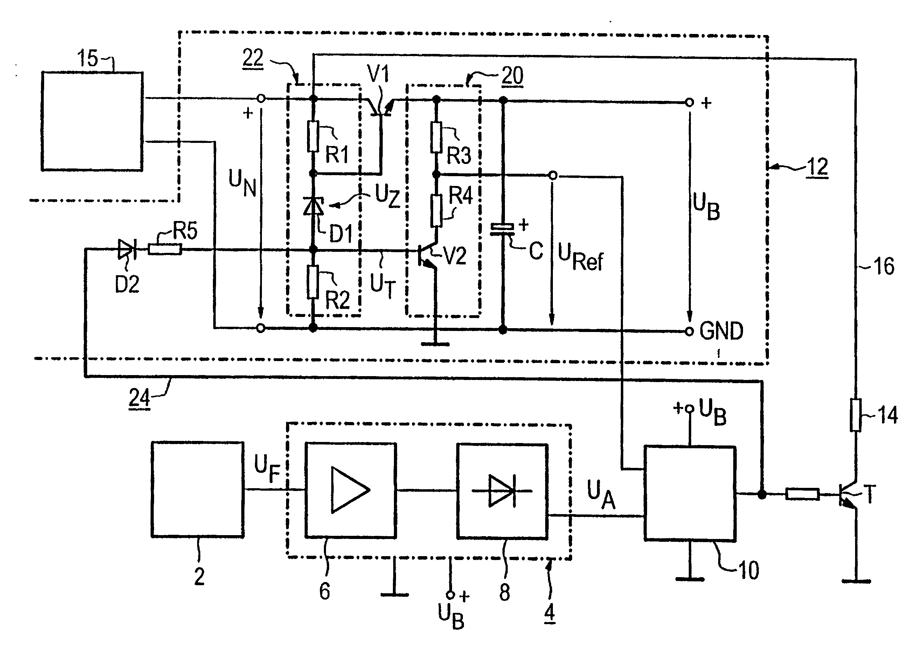

Zur weiteren Erläuterung der Erfindung wird auf das Ausführungsbeispiel der Zeichnung verwiesen, in deren einziger Figur eine Fehlerstrom-Schutzeinrichtung in einem Prinzipschaltbild dargestellt ist.

Gemäß der Figur umfaßt die Fehlerstrom-Schutzeinrichtung einen Summenstromwandler 2, dem eine Verstärkerschaltung 4 nachgeschaltet ist, die ein in der Sekundärwicklung des Summenstromwandlers 2 induziertes Spannungssignal U_{F} in eine gleichgerichtete Fehlerspannung U_{A} umwandelt. Hierzu ist in der Verstärkerschaltung ein Verstärker 6 und ein Gleichrichter 8 vorgesehen. Der Verstärkerschaltung 4 ist eine Vergleichsschaltung 10, beispielsweise ein Komparator, nachgeschaltet, in der die Fehlerspannung U_{A} mit einer von einer Referenzschaltung 12 bereitgestellten Referenzspannung U_{Ref} verglichen wird. Ist die Fehlerspannung U_{A} größer als die Referenzspannung U_{Ref} wird vom Ausgang der Vergleichsschaltung 10 die Basis eines Schalttransistors T angesteuert. Im Kollektor-Emitterkreis des Schalttransistors T ist eine Auslöserelais-Spule 14 zwischen eine Ausgangsspannung U_{N} eines Netzteils 15 und Masse geschaltet.

Summenstromwandler 2, Verstärkerschaltung 4, Vergleichsschaltung 10 sowie der die Auslöserelais-Spule 14 und den Schalttransistor T enthaltende Schaltkreis 16 bilden den Auslösekreis der Fehlerstrom-Schutzeinrichtung.

Die zum Betreiben der elektronischen Bauelemente dieses Auslösekreises erforderliche Betriebsspannung U_{B} wird von einer Referenzschaltung 12 bereitgestellt, an deren Eingang die vom Netzteil 15 bereitgestellte Ausgangsspannung U_{N} anliegt.

Die Ausgangsspannung U_{N} des Netzteils 15 wird über eine Spannungsstabilisierungsschaltung auf die Betriebsspannung U_{B} heruntergeregelt. Die Spannungsstabilisierungsschaltung enthält hierzu eine Ermitterfolgerschaltung mit einem Regeltransistor V1, dessen Basis an die Kathode einer Zenerdiode D1 angeschlossen ist, die in Sperrichtung in Serie zwischen zwei Teilerwiderstände R1, R2 geschaltet ist. Die Reihenschaltung aus Teilerwiderstand R1, Zenerdiode D1 und Teilerwiderstand R2 ist parallel zum Ausgang des Netzteils 15 geschaltet.

Der Emitter des Regeltransistors V1 ist mit einem ersten Spannungsteiler 20 (Referenzspannungsteiler) nach Masse geschaltet. Dieser erste Spannungsteiler 20 enthält eine Reihenschaltung aus einem Teilerwiderstand R3, einem Teilerwiderstand R4 sowie einem steuerbaren Schaltelement V2. Der Teilerwiderstand R3 ist an die Betriebsspannung U_{B}, im Ausführungsbeispiel an den Emitter des Regeltransistors V1, angeschlossen. Der steuerbare Schalter V2 ist zwischen den Teilerwiderstand R4 und Masse geschaltet. Zwischen dem Teilerwiderstand R3 und dem Teilerwiderstand R4 befindet sich ein Abgriff für die Referenzspannung U_{Ref}, die dem Komparator 10 zugeführt wird. Ein parallel zum ersten Spannungsteiler 20 nach Masse geschalteter Glättungskondensator C dient zum Glätten der Betriebsspannung U_{B}.

Bei geschlossenem steuerbaren Schaltelement V2 liegt am Referenzeingang des Komparators der Vergleichsschaltung 10 die durch die Betriebsspannung U_{B} und das Teilerverhältnis der Teilerwiderstände R3 und R4 vorgegebene Referenzspannung U_{Ref} an.

Bei geöffnetem Schaltelement V2 fällt der gesamte Spannungsabfall im Spannungsteiler 20 am Schaltelement V2 ab, so daß zwischen dem Teilerwiderstand R3 und dem Teilerwiderstand R4 die Betriebsspannung U_{B} anliegt.

Im Ausführungsbeispiel ist der steuerbare Schalter V2 ein bipolarer npn-Transistor, dessen Basis durch den Spannungsabfall an dem zur Zenerdiode D1 in Reihe geschalteten Teilerwiderstand R2 gesteuert wird. Ist die Ausgangsspannung U_{N} des Netzteils 15 größer als die Zenerspannung U_{Z} der Zenerdiode D1, wird diese leitend und auf die Basis des als steuerbares Schaltelement V2 verwendeten Transistors wird eine dem Teilerverhältnis der Teilerwiderstände R1 und R2 entsprechende Steuerspannung gegeben. Die Reihenschaltung aus Teilerwiderstand R1, Zenerdiode D1 und Teilerwiderstand R2 bildet somit einen zweiten Spannungsteiler 22 (Steuerspannungsteiler), dessen Teilerspannung als Steuerspannung U_{T} für das steuerbare Schaltelement V2 dient.

Ist die Ausgangsspannung U_{N} des Netzteils 15 größer als die Zenerspannung U_{Z} der Zenerdiode D1, wird diese leitend und der als steuerbares Schaltelement V2 vorgesehene Transistor ist ebenfalls leitend. Bei Vernachlässigung der Kollektor-Emitter-Sättigungsspannung des Transistors ist somit der erste Spannungsteiler 20 gegen Masse geschaltet, d. h. das Schaltelement V2 ist geschlossen.

Fällt die Ausgangsspannung U_{N} des Netzteils 15 unter die Zenerspannung U_{Z} der Zenerdiode D1 ab, so bricht der Stromfluß durch die Zenerdiode D1 ab und die Steuerspannung U_{T} sinkt auf Massepotential. Der als steuerbare Schalter V2 verwendete Transistor sperrt und die momentane Referenzspannung U_{ref}' wird auf die Höhe der momentanen Betriebsspannung U_{B}' angehoben. Dadurch ist sichergestellt, daß die am Ausgang der Verstärkerschaltung 4 anstehende Fehlerspannung U_{A} die dem Referenzeingang der Vergleichsschaltung 10 bei Abschalten des Netzteils 15 zugeführte momentane Referenzspannung U_{Ref}' der Vergleichsschaltung nicht überschreiten kann, so daß der Schalttransistor T im gesperrten Zustand verbleibt. Eine Fehlauslösung beim Abschalten des Netzteils 15 ist dadurch sicher verhindert.

Ein weiterer Vorteil der im Ausführungsbeispiel dargestellten Schaltung liegt auch darin, daß der Einfluß der temperaturabhängigen Basis-Emitter-Spannung des Regeltransistors V1 auf die Betriebsspannung U_{B} weitestgehend eliminiert werden kann, wenn als steuerbares Schaltelement V2 ein baugleicher Transistor verwendet wird. In diesem Fall heben sich die Basis-Ermitter-Spannungen der beiden Transistoren V1 und V2 im Hinblick auf die Betriebsspannung U_{B} auf, so daß diese stets annähernd gleich der Zenerspannung U_{Z} der Zenerdiode D1 ist.

Der Ausgang der Vergleichsschaltung 10 ist außerdem über eine Rückkopplungsschaltung 24 an die Steuerleitung für das steuerbare Schaltelement V2 angeschlossen. Die Rückkopplungsschaltung 24 enthält eine Diode D2, der ein Widerstand R5 in Reihe geschaltet ist.

Durch diese Beschaltung wird sichergestellt, daß die Fehlerstrom-Schutzeinrichtung auch in einem Unterspannungsfall bei Auftreten eines unzulässigen Fehlerstromes sicher anspricht. Ein solcher Unterspannungsfall liegt beispielsweise dann vor, wenn das Netzteil 15 statt mit Drehstromanschluß von beispielsweise 480 V nur noch aus zwei Außenleitern mit beispielsweise 50 V versorgt wird.

Wird in diesem Fall die niederohmige Auslöserelais-Spule 14 an die Netzteilausgangsspannung U_{N} angelegt, so kann diese aufgrund des Spannungsabfalles an den Schutzbeschaltungswiderständen im Netzteil 15 abfallen, so daß als Folge davon der Stromfluß über die Zenerdiode D1 unterbrochen wird.

Ohne die aus Diode D2 und Widerstand R5 gebildete Rückkopplung würde sofort der als steuerbares Schaltelement V2 verwendete Schalttransistor sperren und die Referenzspannung U_{Ref} auf die momentane Betriebsspannung U_{B}' ansteigen, so daß die Ursache für die Auslösung, nämlich daß die an der Vergleichsschaltung 10 anstehende Fehlerspannung U_{A} größer ist als die von der Referenzschaltung 16 bereitgestellte Referenzspannung U_{Ref} sofort wieder aufgehoben wäre. Eine zuverlässige Auslösung ist in diesem Fall nicht mehr sichergestellt.

Durch die Rückkopplung des Ausgangs der Vergleichsschaltung 10 auf die Steuerleitung für das steuerbare Schaltelement V2 wird die positive Ausgangsspannung der Vergleichseinrichtung 10 als Steuerspannung für das steuerbare Schaltelement V2 verwendet und deren Öffnen verhindert, d. h. im Ausführungsbeispiel bleibt der als steuerbares Schaltelement V2 verwendete Transistor auch bei durch Ansteuerung der Auslöserelais-Spule 14 verursachte Spannungseinbrüche durchgeschaltet.

Die in die Rückkopplungsschaltung 24 geschaltete Diode D2 verhindert den Kurzschluß des Widerstandes R2 für den Fall, daß die Fehlerspannung U_{A} kleiner ist als die Referenzspannung U_{Ref}.

## Patentansprüche

1. Fehlerstrom-Schutzeinrichtung, mit einer Verstärkerschaltung (4) zum Erzeugen einer aus einem Fehlerstrom abgeleiteten Fehlerspannung (U_{A}), mit einer Vergleicherschaltung (10) zum Vergleichen der Fehlerspannung (U_{A}) mit einer Referenzspannung (U_{Ref}), und mit einer an ein Netzteil (15) angeschlossenen Referenzschaltung zum Erzeugen der Referenzspannung (U_{Ref}) sowie einer Betriebsspannung (U_{B}) für die Verstärkerschaltung (4), **dadurch gekennzeichnet, dass** Mittel (20,22) vorgesehen sind, die bei Absinken der Ausgangsspannung (U_{N}) des Netzteils (15) unter einen vorgegebenen Wert die Referenzspannung (U_{Ref}) wenigstens auf die momentane Betriebsspannung (U_{B}') zumindest dann erhöhen, wenn die Fehlerspannung (U_{A}) kleiner ist als die Referenzspannung (U_{Ref}).

2. Fehlerstrom-Schutzeinrichtung nach Anspruch 1, bei dem die Referenzschaltung (12) einen an die Betriebsspannung (U_{B}) angeschlossenen ersten Spannungsteiler (20) zum Erzeugen der Referenzspannung (U_{ref}) enthält, der über ein in Abhängigkeit von der Ausgangsspannung (U_{N}) des Netzteils (15) steuerbares Schaltelement (V2) an Masse angeschlossen ist.

3. Fehlerstrom-Schutzeinrichtung nach Anspruch 2, bei dem als steuerbares Schaltelement (V2) ein Transistor vorgesehen ist.

4. Fehlerstrom-Schutzeinrichtung nach Anspruch 2 oder 3, bei dem die Referenzschaltung (12) einen zweiten Spannungsteiler (22) zum Erzeugen einer Steuerspannung (U_{T}) für das steuerbare Schaltelement (V2) enthält.

5. Fehlerstrom-Schutzeinrichtung nach Anspruch 4, bei dem der zweite Spannungsteiler (22) zwischen der Ausgangsspannung des Netzteiles (U_{N}) und Masse geschaltet ist.

6. Fehlerstrom-Schutzeinrichtung nach Anspruch 4 oder 5, bei dem der zweite Spannungsteiler (22) eine in Serie zwischen seine Teilerwiderstände (R1,R2) in Sperrichtung geschaltete Zenerdiode (D1) umfaßt.

7. Fehlerstrom-Schutzeinrichtung nach Anspruch 3 in Verbindung mit Anspruch 6, bei dem die Basis des als steuerbares Schaltelement (V2) vorgesehenen Transistors an die Zenerdiode (D1) angeschlossen ist.

8. Fehlerstrom-Schutzeinrichtung nach einem der Ansprüche 4 bis 7, bei dem der Ausgang der Vergleichsschaltung (10) über eine Rückkopplungsschaltung (24) an die Referenzschaltung (12) angeschlossen ist.

9. Fehlerstrom-Schutzeinrichtung nach Anspruch 8, bei dem die Rückkopplungsschaltung (24) eine Diode (D2) und einen dazu in Serie geschalteten Widerstand (R5) enthält und an eine die Steuerspannung (U_{T}) führende Steuerleitung angeschlossen ist.

10. Fehlerstrom-Schutzeinrichtung nach einem der vorhergehenden Ansprüche, bei dem die Referenzschaltung (12) eine Spannungsstabilisierungsschaltung (D1,R1,V1) zum Erzeugen einer stabilisierten Betriebsspannung (U_{B}) aus der Ausgangsspannung (U_{N}) enthält.

## Claims

1. Residual current device, having an amplifier circuit (4) for producing a fault voltage (U_{A}) which is derived from a fault current, having a comparison circuit (10) for comparing the fault voltage (U_{A}) with a reference voltage (U_{Ref}), and having a reference circuit, which is connected to a power supply unit (15), for producing the reference voltage (U_{Ref}) as well as an operating voltage (U_{B}) for the amplifier circuit (4), **characterised in that** means (20, 22) are provided which, if the output voltage (U_{N}) from the power supply unit (15) falls below a predetermined value, raise the reference voltage (U_{Ref}) at least to the instantaneous operating voltage (U_{B}'), at least if the fault voltage (U_{A}) is less than the reference voltage (U_{Ref}).

2. Residual current device according to Claim 1, in which the reference circuit (12) contains a first voltage divider (20), which is connected to the operating voltage (U_{B}), for producing the reference voltage (U_{Ref}), which voltage divider (20) is connected to ground via a switching element (V2) which can be controlled as a function of the output voltage (U_{N}) from the power supply unit (15).

3. Residual current device according to Claim 2, in which a transistor is provided as the controllable switching element (V2).

4. Residual current device according to Claim 2 or 3, in which the reference circuit (12) contains a second voltage divider (22) for producing a control voltage (U_{T}) for the controllable switching element (V2).

5. Residual current device according to Claim 4, in which the second voltage divider (22) is connected between the output voltage of the power supply unit (U_{N}) and ground.

6. Residual current device according to Claim 4 or 5, in which the second voltage divider (22) comprises a zener diode (D1) which is connected in series, in the reverse direction, between the divider resistors (R1, R2) of said second voltage divider (22).

7. Residual current device according to Claim 3 in conjunction with Claim 6, in which the base of the transistor which is provided as the controllable switching element (V2) is connected to the zener diode (D1).

8. Residual current device according to one of Claims 4 to 7, in which the output of the comparison circuit (10) is connected to the reference circuit (12) via a feedback circuit (24).

9. Residual current device according to Claim 8, in which the feedback circuit (24) contains a diode (D2) and a resistor (R5) connected in series with it, and is connected to a control line which carries the control voltage (U_{T}).

10. Residual current device according to one of the preceding claims, in which the reference circuit (12) contains a voltage stabilisation circuit (D1, R1, V1) for producing a stabilised operating voltage (U_{B}) from the output voltage (U_{N}).

## Revendications

1. Dispositif protecteur pour courant de fuite, ayant un circuit amplificateur (4) pour produire une tension de défaut (U_{A}) déduite d'un courant de fuite, avec un circuit comparateur (10) pour comparer la tension de défaut (U_{A}) à une tension de référence (U_{Ref}) et ayant un circuit de référence raccordé à un bloc d'alimentation (15) pour produire la tension de référence (U_{Ref}) ainsi qu'une tension de fonctionnement (U_{B}) pour le circuit amplificateur (4), **caractérisé par le fait que** des moyens (20, 22) sont prévus pour, lors de la diminution de la tension de sortie (U_{N}) du bloc d'alimentation (15) en dessous d'une valeur prédéterminée, augmenter la tension de référence (U_{Ref}) au moins à la tension de fonctionnement momentanée (U_{B'}) au moins lorsque la tension de défaut (U_{A}) est inférieure à la tension de référence (U_{Ref}).

2. Dispositif protecteur pour courant de fuite selon la revendication 1, dans lequel le circuit de référence (12) contient un premier diviseur de tension (20) raccordé à la tension de fonctionnement (U_{B}) qui est destiné à produire la tension de référence (U_{Ref}) et qui est raccordé à la masse par l'intermédiaire d'un élément commutateur (V2) commandable en fonction de la tension de sortie (U_{N}) du bloc d'alimentation (15).

3. Dispositif protecteur pour courant de fuite selon la revendication 2, dans lequel un transistor est prévu comme élément commutateur commandable (V2).

4. Dispositif protecteur pour courant de fuite selon la revendication 2 ou 3, dans lequel le circuit de référence (12) contient un deuxième diviseur de tension (22) pour produire une tension de commande (U_{T}) pour l'élément commutateur commandable (V2).

5. Dispositif protecteur pour courant de fuite selon la revendication 4, dans lequel le deuxième diviseur de tension (22) est branché entre la tension de sortie (UN) du bloc d'alimentation et la masse.

6. Dispositif protecteur pour courant de fuite selon la revendication 4 ou 5, dans lequel le deuxième diviseur de tension (22) comprend une diode Zener (D1) branchée dans le sens de non-conduction en série entre ses deux résistances de diviseur (R1, R2).

7. Dispositif protecteur pour courant de fuite selon la revendication 3 en relation avec la revendication 6, dans lequel la base du transistor prévu comme élément commutateur commandable (V2) est raccordée à la diode Zener (D1).

8. Dispositif protecteur pour courant de fuite selon l'une des revendications 4 à 7, dans lequel la sortie du circuit comparateur (10) est raccordee par l'intermédiaire d'un circuit de rétroaction (24) au circuit de référence (12).

9. Dispositif protecteur pour courant de fuite selon la revendication 8, dans lequel le circuit de rétroaction (24) contient une diode (D2) et une résistance (R5) branchée en série avec celle-ci et il est raccordé à une ligne de commande conduisant la tension de commande (U_{T}).

10. Dispositif protecteur pour courant de fuite selon l'une des revendications précédentes, dans lequel le circuit de référence (12) contient un circuit stabilisateur de tension (D1, R1, V1) pour produire une tension de fonctionnement stabilisée (U_{B}) à partir de la tension de sortie (U_{N}).
